(19) Europäisches Patentamt
European Patent Office
Office européen des brevets

(11) **EP 3 952 037 A1**

(12) **EUROPEAN PATENT APPLICATION**
published in accordance with Art. 153(4) EPC

(43) Date of publication:
**09.02.2022 Bulletin 2022/06**

(21) Application number: **20783747.7**

(22) Date of filing: **27.03.2020**

(51) International Patent Classification (IPC):
**H01S 3/067** (2006.01)  **G02B 6/02** (2006.01)
**G02B 6/036** (2006.01)

(52) Cooperative Patent Classification (CPC):
**G02B 6/02; G02B 6/036; H01S 3/067**

(86) International application number:
**PCT/JP2020/014337**

(87) International publication number:
**WO 2020/203900 (08.10.2020 Gazette 2020/41)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:  **29.03.2019  JP 2019065619
25.09.2019  JP 2019174773**

(71) Applicant: **Fujikura Ltd.
Tokyo 135-8512 (JP)**

(72) Inventor: **KITAHARA, Rintaro
Sakura-shi, Chiba 285-8550 (JP)**

(74) Representative: **Plasseraud IP
66, rue de la Chaussée d'Antin
75440 Paris Cedex 09 (FR)**

(54) **ACTIVE ELEMENT-ADDED OPTICAL FIBER, RESONATOR, AND FIBER LASER DEVICE**

(57)    When a radius of a core (11) of an active element-added optical fiber (10) is d and a distance from a central axis C in a radial direction of the core (11) is r, the core 11 includes a first region (11a) of $0 \leq r \leq 0.65d$ and a second region (11b) that surrounds the first region (11a) and is of $0.65d < r \leq d$, and an active element pumped by pumping light is added to the first region (11a) at least in part, the active element is not added to the second region (11b), and a shape index is 0.99 or more and less than 1.

FIG. 2

**Description**

Technical Field

The present invention relates to an active element-added optical fiber, a resonator, and a fiber laser device capable of suppressing deterioration of beam quality.

Background Art

A fiber laser device, which is excellent in light condensing property, has high power density, and can obtain light that becomes a small beam spot, is used in various fields such as a laser processing field and a medical field. In such a fiber laser device, output of emitted light is increased. However, when the power density of light in an optical fiber increases, wavelength conversion of light due to stimulated Raman scattering is likely to occur, and light having an unintended wavelength can be emitted. In this case, the light reflected by a workpiece or the like returns to the fiber laser device and is amplified, and the amplification of the light having the wavelength to be amplified in design becomes unstable, and the output can become unstable.
Means for suppressing stimulated Raman scattering in the optical fiber include increasing the effective cross-sectional area of light propagating through the core. One method for increasing the effective cross-sectional area is to increase the diameter of the core. Therefore, in order to suppress stimulated Raman scattering in the optical fiber, for example, an optical fiber having a core that enables propagation of light in a few mode is used.
In the fiber laser device, it is preferable that the beam quality of emitted light is excellent from the viewpoint of light condensing property or the like. Therefore, there is a demand for suppressing excitation of light in modes other than the basic mode even when the effective cross-sectional area of light is increased by using an optical fiber having a core that enables propagation of light in the few mode as described above. Note that the beam quality is indicated, for example, by $M^2$ (M square) or the like. Therefore, amplification of light in a higher mode is suppressed while using an active element-added optical fiber having a core that enables propagation of light in the few mode as in an active element-added optical fiber described in Patent Literature 1 below.
[Patent Literature 1] JP 5124701 B1

Summary of Invention

However, there is a demand for an active element-added optical fiber capable of further suppressing deterioration of beam quality and amplifying light. Therefore, an object of the present invention is to provide an active element-added optical fiber, a resonator, and a fiber laser device capable of suppressing deterioration of beam quality and amplifying light.
In order to achieve the above object, the present invention is an active element-added optical fiber comprising a core, in which when a radius of the core is d and a distance from a central axis in a radial direction of the core is r, the core includes a first region of $0 \leq r \leq 0.65d$ and a second region that surrounds the first region and is of $0.65d < r \leq d$, and an active element pumped by pumping light is added to the first region at least in part, the active element is not added to the second region, and a shape index $\kappa$ represented by Formula (1) described below is 0.99 or more and less than 1.

$$\kappa = \left( \int_0^\infty \frac{E(r)\,E_i(r)}{\sqrt{\int_0^\infty E(r)dr \int_0^\infty E_i(r)dr}}\, dr \right)^2 \qquad \cdots \ (1)$$

E(r) is an electric field distribution of light propagating through the active element-added optical fiber, and Ei(r) is an electric field distribution of light propagating through a step-index type optical fiber in a case where a refractive index profile of the core is averaged
The inventor has found that with the active element-added optical fiber in which the shape index $\kappa$ represented by Formula (1) described above is 0.99 or more and less than 1, an active element is added to the first region at least in part, and the active element is not added to the second region, LP01 mode light is amplified, and light in which power of light in a higher mode, which is the LP11 mode or higher, is suppressed can be emitted. In the active element-added optical fiber, light is generally incident from another optical fiber, and the light is amplified. Since the shape index $\kappa$ is

0.99 or more and less than 1 as described above, it is considered that light in an axisymmetric mode, which is the LP02 mode or higher, is less likely to be excited when light is incident on the core of the active element-added optical fiber. Further, it is considered that the active element is added to the first region at least in part to amplify the LP01 mode light, and the active element is not added to the second region to suppress the amplification of the light in a higher mode, which is the LP11 mode or higher, even when the light in a higher mode, which is the LP11 mode or higher, is excited. Therefore, with the active element-added optical fiber of the present invention, deterioration of beam quality can be suppressed and light can be amplified.

Further, it is preferable that the active element is added to a predetermined region in a radial direction from the central axis in the first region, and when a radius of the predetermined region is ra, an average value of a concentration of the active element in a region of $0 \leq r \leq 0.1ra$ is higher than an average value of a concentration of the active element in a region of $0.1ra < r < 0.9ra$, and at least one region having a refractive index higher than an average value of a refractive index in the predetermined region exists in a region of $0.5ra < r < ra$.

When the average value of the concentration of the active element in the region of $0 \leq r \leq 0.1ra$ is higher than the average value of the concentration of the active element in the region of $0.1ra < r < 0.9ra$ as described above, the basic mode having high intensity at the center of the core can be preferentially amplified. Furthermore, since at least one region having a refractive index higher than the average value of the refractive index in the predetermined region exists in the region of $0.5ra < r < ra$, it is possible to suppress the effective cross-sectional area of the light propagating through the core from becoming too small and to suppress the occurrence of a nonlinear optical phenomenon.

In this case, it is preferable that the standard deviation of the refractive index profile in the region of $0.9ra + 0.1d < r \leq 0.9d$ is 0.01 or less.

As described above, since the variation in the refractive index in the outer peripheral portion of the core is small, even when a region having a refractive index higher than the average value of the refractive index in the predetermined region exists in the region of $0.5ra < r < ra$ as described above, Formula (1) described above can be easily satisfied.

Further, the active element-added optical fiber may further include: a cladding that surrounds the core with no gap, in which at least one maximum value of a relative refractive index difference with respect to the cladding exists in a region of 0.62d or less in the core, and an average value of the relative refractive index difference in a region of $0 \leq r \leq 0.1d$ in the core may be the maximum value or less.

Note that when the optical fiber includes an inner cladding surrounding the core without a gap and an outer cladding surrounding the inner cladding without a gap, the inner cladding may be simply referred to as a cladding.

Further, a plurality of maximum values may exist. Here, the "maximum value or less" when a plurality of maximum values exists means a maximum value or less indicating the largest relative refractive index difference among the plurality of maximum values.

By configuring the active element-added optical fiber in this manner, for example, the shape index κ can be set to 0.99 or more.

In this case, the maximum value may exist in a region of 0.45d or more and 0.62d or less.

With such a configuration, the effective refractive index can be made larger than that of a step index optical fiber.

Alternatively, the active element-added optical fiber may further include: a cladding that surrounds the core with no gap, in which at least one maximum value of a relative refractive index difference with respect to the cladding exists in a region of 0.1d or more and 0.83d or less in the core exists, and an average value of the relative refractive index difference in a region of $0.055d \leq r \leq 0.1d$ in the core may be the maximum value or more.

Further, also in this case, a plurality of maximum values may exist. Here, the "maximum value or more" when a plurality of maximum values exists means a maximum value or more indicating the largest relative refractive index difference among the plurality of maximum values.

Even by configuring the active element-added optical fiber in this manner, for example, the shape index κ can be set to 0.99 or more.

Further, the active element-added optical fiber may further include: a cladding that surrounds an outer peripheral surface of the core with no gap, in which an average value of a relative refractive index difference of the core with respect to the cladding is 0.10% or more, at least one maximum value of the relative refractive index difference exists in a region of 0.45d or more in the core, and an average value of the relative refractive index difference in a region of $0 \leq r \leq 0.1d$ in the core is the maximum value or less.

By configuring the active element-added optical fiber in this manner, for example, the effective cross-sectional area can be increased.

Alternatively, the active element-added optical fiber may further include: a cladding that surrounds an outer peripheral surface of the core with no gap, in which an average value of a relative refractive index difference of the core with respect to the cladding is larger than 0% and 0.18% or less, at least one maximum value of the relative refractive index difference exists in a region of 0.55d or less in the core, and an average value of the relative refractive index difference in a region of $0.055d \leq r \leq 0.1d$ in the core may be the maximum value or more.

By configuring the active element-added optical fiber in this manner, for example, the effective cross-sectional area can be increased.

Further, it is preferable that the active element is added throughout the first region.

By adding the active element in this manner, the LP01 mode light can be amplified at a higher amplification rate.

Further, the theoretical cutoff wavelength of the LP02 mode light is preferably shorter than 1760 nm.

By setting the theoretical cutoff wavelength of the LP02 mode light as described above, for example, when the active element-added optical fiber is used by being bent at a diameter of 120 mm, the LP02 mode light can be leaked while the LP01 mode light propagates. Therefore, with such use, it is possible to suppress the light in a higher mode, which is the LP02 mode or higher, from being included in the emitted light.

Further, in this case, the diameter of the cladding surrounding the core is preferably 430 $\mu$m or less.

When such cladding made of quartz glass has such a diameter, for example, even when the active element-added optical fiber is used by being bent at a diameter of 120 mm, it is possible to suppress an increase in breakage probability and to expect high reliability in a long term.

The active element may include ytterbium.

In this case, a ratio of a diameter of a region to which the ytterbium is added to a diameter of the core is preferably 0.55 or more and 0.65 or less.

Further, in order to achieve the above object, a fiber laser device according to the present invention includes any one of the active element-added optical fibers described above and a light source that emits light for pumping the active element.

As described above, in this active element-added optical fiber, deterioration of beam quality is suppressed and light can be amplified, and thus, with this fiber laser device, light in which deterioration of beam quality is suppressed can be emitted.

Further, in order to achieve the above object, a resonator of the present invention further includes: any of the active element-added optical fibers described above; a first optical fiber configured to include a core optically coupled to the core of the active element-added optical fiber on one side of the active element-added optical fiber; and a second optical fiber configured to include a core optically coupled to the core of the active element-added optical fiber on an other side of the active element-added optical fiber; in which the core of the first optical fiber includes a first mirror that reflects light having at least a part of wavelength of light emitted by the pumped active element, the core of the second optical fiber includes a second mirror that reflects light having at least a part of wavelength of the light reflected by the first mirror at a reflectance lower than a reflectance of the first mirror, and a shape index $\kappa'$ of each of the first optical fiber and the second optical fiber represented by Formula (2) described below is 0.99 or more and less than 1.

$$\kappa' = \left( \int_0^\infty \frac{E'(r')\,E'_i(r')}{\sqrt{\int_0^\infty E'(r')dr' \int_0^\infty E'_i(r')dr'}} \, dr' \right)^2 \qquad \cdots \ (2)$$

r' indicates a distance in a radial direction in a case where a central axis of the first optical fiber and the second optical fiber is 0, E'(r') is an electric field distribution of each light propagating through the first optical fiber and the second optical fiber, and $E'_i(r')$ is an electric field distribution of each light propagating through a step-index type optical fiber in a case where each of a refractive index profile of the core of the first optical fiber and a refractive index profile of the core of the second optical fiber are averaged.

Further, in order to achieve the above object, a fiber laser device according to the present invention includes the resonator described above and a light source that emits light for pumping the active element.

With the resonator and the fiber laser device including the resonator, when the shape index $\kappa'$ of the first optical fiber and the second optical fiber is 0.99 or more and less than 1, excitation of light in an axisymmetric mode, which is the LP02 mode or higher, is suppressed in light traveling between the active element-added optical fiber and the first optical fiber and between the active element-added optical fiber and the second optical fiber. Therefore, light in which deterioration of beam quality is suppressed can be emitted.

As described above, according to the present invention, there are provided an active element-added optical fiber, a resonator, and a fiber laser device capable of suppressing deterioration of beam quality and amplifying light.

Brief Description of Drawings

FIG. 1 is a diagram illustrating a fiber laser device according to an embodiment of the present invention.

FIG. 2 is a diagram illustrating a state of a cross section perpendicular to a longitudinal direction of an active element-added optical fiber.

FIG. 3 is a diagram illustrating concentration distribution of an active element added to a core of an active element-added optical fiber.

FIG. 4 is a diagram illustrating a state of a refractive index profile of a core of an active element-added optical fiber.

FIG. 5 is a diagram illustrating a refractive index profile of a core of a first optical fiber.

FIG. 6 is a diagram illustrating a variation of a fiber laser device.

FIG. 7 is a diagram illustrating a relationship between a diameter of a cladding and a breakage probability.

FIG. 8 is a diagram illustrating a state of a refractive index profile of a core of an active element-added optical fiber of Example 7.

FIG. 9 is a diagram illustrating concentration distribution of an active element added to a core of an active element-added optical fiber of Example 7.

FIG. 10 is a diagram illustrating an example of a relationship between the position of a maximum value of a relative refractive index difference in a core and a shape index.

FIG. 11 is a diagram illustrating another example of a relationship between the position of a maximum value of a relative refractive index difference in a core and a shape index.

FIG. 12 is a diagram illustrating an example of a relationship between a difference between an effective cross-sectional area of an active element-added optical fiber of the present invention and an effective cross-sectional area of a step-type optical fiber and a position of a maximum value of a relative refractive index difference in a core of the active element-added optical fiber of the present invention.

FIG. 13 is a diagram illustrating another example of a relationship between a difference between an effective cross-sectional area of an active element-added optical fiber of the present invention and an effective cross-sectional area of a step-type optical fiber and a position of a maximum value of a relative refractive index difference in a core of the active element-added optical fiber of the present invention.

Description of Embodiments

Preferred embodiments of an optical fiber and a laser device according to the present invention will be described below in detail with reference to the drawings. The embodiments illustrated below are for facilitating the understanding of the present invention, and are not for limiting the interpretation of the present invention. The present invention can be changed or modified without departing from the spirit. Note that, for easy understanding, scales in the drawings can be different from scales described in the description below.

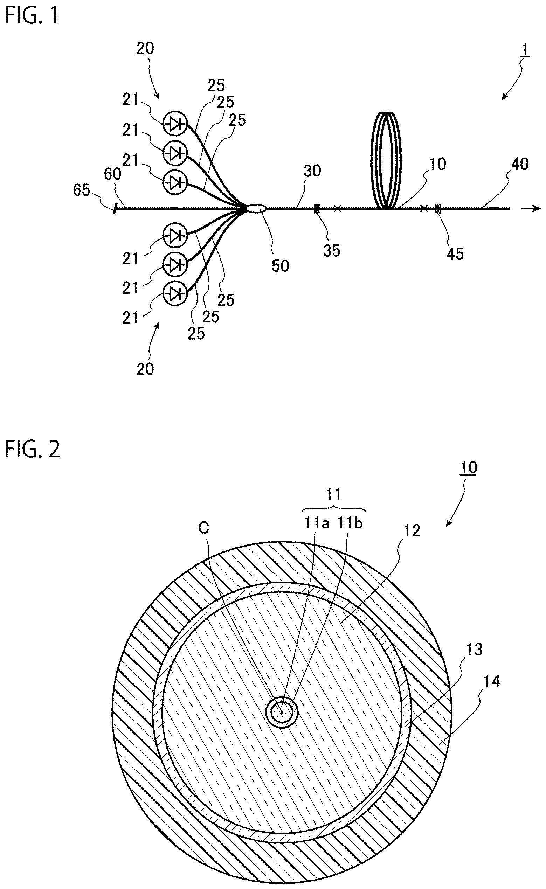

FIG. 1 is a diagram illustrating a laser device according to the present embodiment. As illustrated in FIG. 1, a fiber laser device 1 according to the present embodiment is a resonator-type fiber laser device, and mainly includes an active element-added optical fiber 10, a pumping light source 20, a first optical fiber 30, a first FBG 35 provided in the first optical fiber 30, a second optical fiber 40, a second FBG 45 provided in the second optical fiber 40, an optical combiner 50, and a third optical fiber 60.

<Configuration of the active element-added optical fiber>

FIG. 2 is a cross-sectional view illustrating a cross-sectional structure of the active element-added optical fiber 10 illustrated in FIG. 1. As illustrated in FIG. 2, the active element-added optical fiber 10 mainly includes a core 11, an inner cladding 12 surrounding the outer peripheral surface of the core 11 without a gap, an outer cladding 13 covering the outer peripheral surface of the inner cladding 12, and a cover layer 14 covering the outer cladding 13. That is, the active element-added optical fiber 10 is a so-called double-clad optical fiber. The refractive index of the inner cladding 12 is lower than the refractive index of the core 11, and the refractive index of the outer cladding 13 is lower than the refractive index of the inner cladding 12.

The core 11 has a first region 11a and a second region 11b. The first region 11a is a region from a central axis C to 65% of the radius of the core 11. Description will be given below assuming that the radius of the core 11 is d and the distance from the central axis C in the radial direction of the core is r. In this case, the first region 11a is a region of $0 \le r \le 0.65d$. Further, the second region 11b is a region that surrounds the first region 11a and is from the outer peripheral surface of the first region 11a to the outer peripheral surface of the core 11. That is, the second region 11b is a region that surrounds the first region and is of $0.65d < r \le d$.

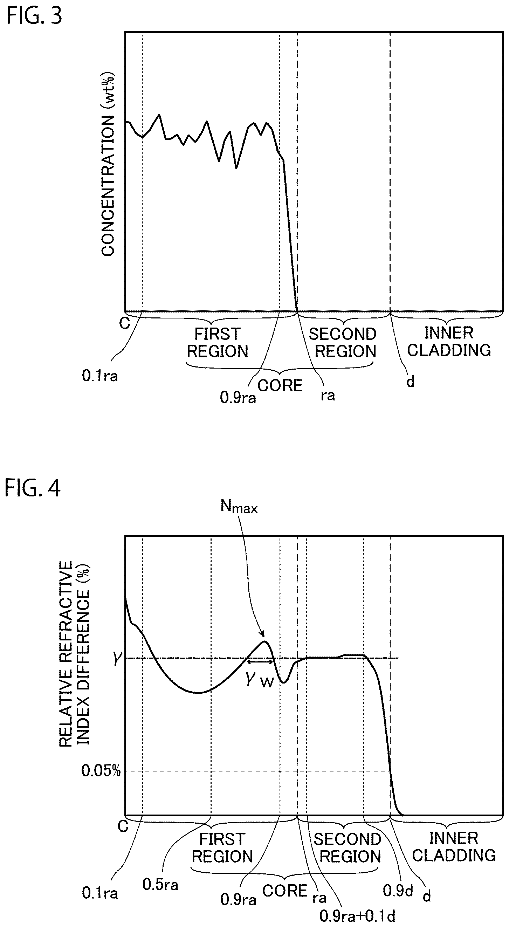

An active element to be pumped by pumping light emitted from the pumping light source 20 is added to the core 11 in part. FIG. 3 is a diagram illustrating concentration distribution of an active element added to the core 11 of the active element-added optical fiber 10. As illustrated in FIG. 3, the first region 11a is made of quartz glass to which the active element is added at least in part, and the second region 11b is made of quartz glass to which the active element is not added. In the present embodiment, the active element is added throughout the first region 11a. Therefore, when the active element is added to a predetermined region in the radial direction, the first region 11a is the predetermined region in the present embodiment. The radius of the predetermined region will be described below as ra. In the present embodiment, ra = 0.65d.

Note that the region to which the active element is added refers to a region to which 0.5 wt% or more of the active element is added, and a region in which the active element is detected at a concentration lower than 0.5 wt% due to diffusion of the active element or the like at the time of manufacturing the active element-added optical fiber cannot be said to be a region to which the active element is added, but is a region to which the active element is not added.

In the present embodiment, the concentration of the active element in the vicinity of the center of the first region 11a is made higher than the average concentration of the active element in the region to which the active element is added around the vicinity of the center. The vicinity of the center is, for example, a region having a radius of 10% of the region to which the active element is added, and in the case of FIG. 3, the average value of the concentration of the active element in the region of $0 \leq r \leq 0.1ra$ is higher than the average value of the concentration of the active element in the region of $0.1ra < r < 0.9ra$.

In the present embodiment, the active element added to the first region 11a is ytterbium (Yb), and aluminum and phosphorus are further added to the first region 11a in order to enhance resistance to photodarkening. FIG. 4 is a diagram illustrating a state of the refractive index profile of the core 11 of the active element-added optical fiber 10. With such an additive and its concentration distribution, the first region 11a has a relative refractive index profile illustrated in FIG. 4. Further, for example, a dopant such as germanium (Ge) that increases the refractive index is added to the second region 11b.

Note that in order to adjust the refractive index, a dopant such as fluorine (F) or boron (B) may be added at least in part. Further, although different from the present embodiment, the active element added to the first region 11a may be an active element other than ytterbium. Examples of such active element include thulium (Tm), cerium (Ce), neodymium (Nd), europium (Eu), erbium (Er) and the like in addition to ytterbium as a rare earth element, and further include bismuth (Bi) and the like in addition to a rare earth element as an active element.

As illustrated in FIG. 4, the core 11 is a region from the central axis C to the inner cladding 12 where the relative refractive index difference is 0.05%, and is an inner side of a portion where the relative refractive index difference is 0.05% with respect to the inner cladding 12. In FIG. 4, the position where the relative refractive index difference is 0.05%, that is, the outer peripheral surface of the core 11 is indicated by the broken lines. Note that the reason why the region of the core 11 is defined in this way is that even when the shape of the region having a relative refractive index difference of less than 0.05% is slightly changed, there is little influence on the optical characteristics of the active element-added optical fiber 10.

In the present embodiment, in the second region 11b, the relative refractive index difference is substantially constant in the region from the inner peripheral side to the vicinity of the outer periphery, and the relative refractive index difference decreases toward the inner cladding 12 in the region in the vicinity of the outer periphery. Therefore, in the present embodiment, the standard deviation of the refractive index profile in the region of $0.9ra + 0.1d < r \leq 0.9d$ is 0.01 or less.

Further, in the first region 11a, there are portions where the relative refractive index difference is lower and higher than the relative refractive index difference on an inner peripheral side of the second region 11b. In the first region 11a of the active element-added optical fiber 10 of the present embodiment, there are at least two portions where the relative refractive index difference is lower than the relative refractive index difference on the inner peripheral side of the second region 11b and where the relative refractive index difference is higher than the relative refractive index difference on the inner peripheral side of the second region 11b in the radial direction. Further, there is at least one region having a relative refractive index difference higher than the average value of the relative refractive index difference in the first region between a midpoint between the central axis C and the outer peripheral surface of the first region 11a and the outer peripheral surface of the first region 11a. That is, a region having a refractive index higher than the average value of the refractive index in the first region 11a, which is the predetermined region, exists in the region of $0.5ra < r < ra$. As illustrated in FIG. 4, in the present embodiment, the region of $0.5ra < r < ra$ has a refractive index profile in which there is one maximum value $N_{max}$ of the refractive index, that is, one maximum value $N_{max}$ of the relative refractive index difference. More specifically, the maximum value $N_{max}$ refers to a maximum value of the refractive index in a region where a length $\gamma w$ in the radial direction of the region having a refractive index higher than an average value $\gamma$ of the refractive index in the first region 11a is 1/10 or more of the wavelength of light propagating through the active element-added optical fiber 10. Note that the number of maximum values $N_{max}$ is not limited to one.

Further, in the region in the vicinity of the outer periphery of the first region 11a, the relative refractive index difference decreases from the outer periphery of the first region 11a to the inner peripheral side.

A shape index $\kappa$ of the active element-added optical fiber 10 having such a distribution of the relative refractive index difference is 0.99 or more and less than 1. The shape index $\kappa$ is an index indicating how much the refractive index profile is different from the step-index type refractive index profile, and is defined by Formula (3) described below.

$$\kappa = \left( \int_0^\infty \frac{E(r)\,E_i(r)}{\sqrt{\int_0^\infty E(r)dr \int_0^\infty E_i(r)dr}} \, dr \right)^2 \qquad \cdots (3)$$

E(r) is an electric field value of light propagating through the active element-added optical fiber 10 at the distance r, that is, an electric field distribution of light propagating through the active element-added optical fiber 10. Ei(r) is an electric field distribution of light propagating through a step-index type optical fiber in a case where the refractive index profile of the core 11 is averaged.

According to Formula (3), when the shape index $\kappa$ is 1, the optical fiber indicated by the shape index $\kappa$ is a step-index type refractive index profile. Then, as the shape index $\kappa$ decreases from 1, the optical fiber indicated by the shape index $\kappa$ has a refractive index profile different from the step-index type refractive index profile. Although it is difficult to have a shape index $\kappa$ of 1 in terms of manufacturing the optical fiber, an optical fiber having a shape index $\kappa$ of 0.99 or more and less than 1 as in the present embodiment can be easily manufactured.

The shape index $\kappa$ described above is changed by adjusting the concentration of the dopant described above added to the core 11 in the radial direction. Therefore, in the present embodiment, the concentration of ytterbium may be adjusted in the radial direction, and when boron is added, the concentration of boron may be adjusted in the radial direction. Further, since a concentration difference between aluminum and phosphorus influences the refractive index, the concentration difference may be adjusted in the radial direction. Further, the concentration distribution of phosphorus may be adjusted in the radial direction.

Further, the inner cladding 12 is made of, for example, quartz that has a substantially constant refractive index and to which no dopant is added or quartz to which fluorine or another dopant for adjusting the refractive index is added. Further, the outer cladding 13 is made of resin or quartz glass, examples of the resin include ultraviolet curing resin and thermosetting resin, and examples of the quartz include quartz to which a dopant such as fluorine is added so as to have a refractive index lower than that of the inner cladding 12. Further, examples of the material constituting the cover layer 14 include ultraviolet curing resin and thermosetting resin. When the outer cladding 13 is resin, the resin is different from the resin constituting the outer cladding.

The active element-added optical fiber 10 is a few mode fiber, and in a case where at least light having a wavelength of 1070 nm propagates through the core 11, as the light, at least LP02 mode light can propagate in addition to light in the LP01 mode, which is the basic mode. Therefore, the effective cross-sectional area of light can be increased as compared with a case where the active element-added optical fiber 10 is a single mode fiber. Note that, in the active element-added optical fiber 10 of the present embodiment, even in a case where light having a wavelength of 1030 nm to 1090 nm propagates, at least the LP02 mode light can propagate in addition to the light in the LP01 mode, which is the basic mode.

<Configuration other than the active element-added optical fiber>

The first optical fiber 30 is a double-clad optical fiber in which the configuration of the core is different from the configuration of the core 11 of the active element-added optical fiber 10. The first optical fiber 30 is connected to one end of the active element-added optical fiber 10. Therefore, the core 11 of the active element-added optical fiber 10 and the core of the first optical fiber 30 are optically coupled, and the inner cladding 12 of the active element-added optical fiber 10 and the inner cladding of the first optical fiber 30 are optically coupled.

The core of the first optical fiber 30 is mainly different from the core 11 of the active element-added optical fiber 10 in that the active element is not added. The first optical fiber 30 is a few mode fiber, and propagates light that is similar to the light propagating through the core 11 of the active element-added optical fiber 10. Therefore, each LP mode light propagating through the core 11 of the active element-added optical fiber 10 can propagate through the core of the first optical fiber 30 as it is. Note that the definition of the core of the first optical fiber 30 is similar to the definition of the core 11 of the active element-added optical fiber 10.

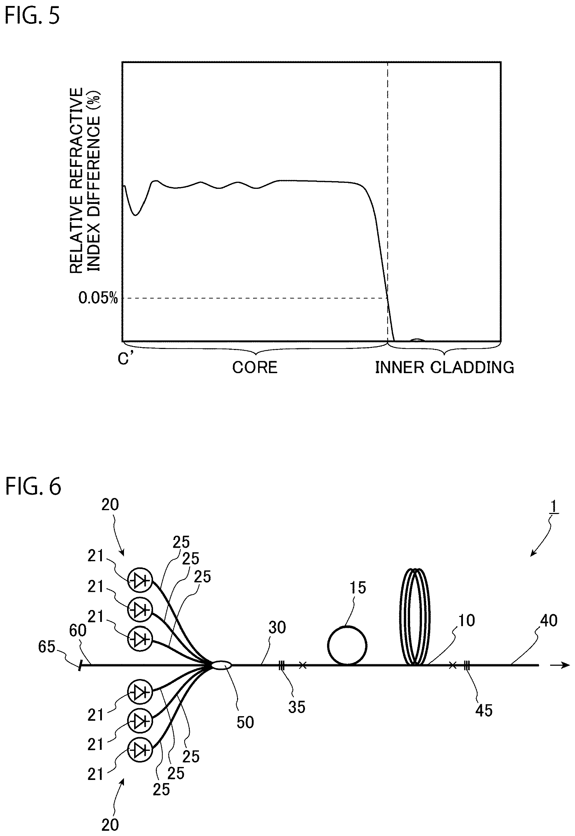

FIG. 5 is a diagram illustrating the refractive index profile of the core of the first optical fiber 30. The core of the first optical fiber 30 has a smaller change in the relative refractive index difference than the active element-added optical fiber 10 in the region from a central axis C' to the vicinity of the outer periphery, and the relative refractive index difference decreases toward the inner cladding in the region in the vicinity of the outer periphery. With such a refractive index profile, a shape index $\kappa'$ of the first optical fiber 30 is 0.99 or more and less than 1. The shape index $\kappa'$ is defined by Formula (4) described below.

$$\kappa' = \left( \int_0^\infty \frac{E'(r')\,E'_i(r')}{\sqrt{\int_0^\infty E'(r')dr' \int_0^\infty E'_i(r')dr'}}\, dr' \right)^2 \qquad \cdots (4)$$

r' represents the distance in the radial direction in a case where the central axis C' of the first optical fiber 30 is 0. E'(r') is an electric field value of light propagating through the first optical fiber 30 at the distance r', that is, an electric field distribution of light propagating through the first optical fiber 30. E'$_i$(r') is an electric field distribution of light propagating through a step-index type optical fiber in a case where the refractive index profile of the core of the first optical fiber 30 is averaged. This shape index $\kappa'$ is changed by adjusting the concentration of the dopant added to the core 11 in the radial direction.

Since the first optical fiber 30 has the refractive index profile illustrated in FIG. 5 and the active element is not added to the first optical fiber 30, the first optical fiber 30 is made of, for example, the same material as the second region 11b in the core 11 of the active element-added optical fiber 10. Further, the configuration of the first optical fiber 30 other than the core in the present embodiment is similar to the configuration of the active element-added optical fiber 10 other than the core 11.

Further, as described above, the first FBG 35 is provided in the first optical fiber 30. In this way, the first FBG 35 is disposed on one side of the active element-added optical fiber 10 and optically coupled to the core 11 of the active element-added optical fiber 10. In the first FBG 35, a high refractive index portion having a refractive index higher than that of a portion other than the first FBG 35 in the core and a low refractive index portion having a refractive index similar to that of a portion other than the first FBG 35 in the core are periodically repeated along the longitudinal direction of the core. The repeating pattern of the high refractive index portion is formed, for example, by irradiating a site to be the high refractive index portion with ultraviolet rays. The first FBG 35 formed in this manner is configured as a first mirror that reflects light including a predetermined wavelength within light emitted when the active element added to the core 11 of the active element-added optical fiber 10 is in a pumped state. For example, when the active element added to the core 11 of the active element-added optical fiber 10 is ytterbium as in the present embodiment, the predetermined wavelength is, for example, a wavelength of 1070 nm. Further, the reflectance of the first FBG 35 is higher than the reflectance of the second FBG 45 to be described later, and light including the predetermined wavelength is reflected, for example, at 99% or more.

The second optical fiber 40, which does not have the outer cladding, is different from the first optical fiber 30, and the other configuration of the second optical fiber 40 is similar to the configuration of the first optical fiber 30 other than the outer cladding. Therefore, the second optical fiber 40 has a configuration in which the cladding surrounds the core and the cladding is covered with the cover layer. The second optical fiber 40 is connected to the other end of the active element-added optical fiber 10. Therefore, the core 11 of the active element-added optical fiber 10 and the core of the second optical fiber 40 are optically coupled, and the inner cladding 12 of the active element-added optical fiber 10 and the cladding of the second optical fiber 40 are optically coupled. Therefore, the few mode light propagating through the core 11 of the active element-added optical fiber 10 propagates through the core of the second optical fiber 40 in the few mode. Note that, in the case of the configuration of the fiber laser device 1 illustrated in FIG. 1, the inner cladding 12 of the active element-added optical fiber 10 and the cladding of the second optical fiber 40 may not be optically coupled.

The relative refractive index profile of the core of the second optical fiber 40 is substantially the same as the relative refractive index profile of the core of the first optical fiber 30 illustrated in FIG. 5. Therefore, the shape index $\kappa'$ of the core of the second optical fiber 40 is 0.99 or more and less than 1, and is represented by Formula (4) described above. However, in a case where Formula (4) described above represents the shape index $\kappa'$ of the second optical fiber 40, r' represents the distance in the radial direction in a case where the central axis C' of the second optical fiber 40 is 0, E'(r') is the electric field distribution of the light propagating through the second optical fiber 40, and E'$_i$(r') is the electric field distribution of the light propagating through the step-index type optical fiber in a case where the refractive index profile of the core of the second optical fiber 40 is averaged.

Further, the second FBG 45 is provided in the core of the second optical fiber 40 as described above. In this way, the second FBG 45 is disposed on the other side of the active element-added optical fiber 10 and optically coupled to the core 11 of the active element-added optical fiber 10. Similar to the first FBG 35, the second FBG 45 is formed by a periodical repetition of a high refractive index portion and a low refractive index portion. The second FBG 45 is configured as a second mirror that reflects light including a predetermined wavelength reflected by the first FBG 35 at a lower reflectance than the first FBG 35. When light reflected by the first FBG 35 is incident, the second FBG 45 reflects the light at a reflectance of, for example, about 10%. In this way, a resonator is formed by the first FBG 35, the active element-added optical fiber 10, and the second FBG 45. Further, in the present embodiment, nothing is particularly connected to the other end of the second optical fiber 40 on the side opposite to the active element-added optical fiber 10, but a glass rod or the like having a diameter larger than that of the core of the second optical fiber 40 may be connected.

The pumping light source 20 includes a plurality of laser diodes 21. In the present embodiment, the laser diodes 21 are, for example, a Fabry-Perot type semiconductor laser made of a GaAs-based semiconductor, and emits pumping light having a center wavelength of 915 nm. Further, each laser diode 21 of the pumping light source 20 is connected to an optical fiber 25, and the pumping light emitted from the laser diode 21 propagates through the optical fiber 25 as, for example, multimode light.

Each optical fiber 25 is connected to one end of the first optical fiber 30 in the optical combiner 50. Specifically, the cores of the respective optical fibers 25 are connected to the inner cladding of the first optical fiber 30 so that the cores of the respective optical fibers 25 are optically coupled to the inner cladding of the first optical fiber 30. Therefore, the pumping light emitted from each laser diode 21 is incident on the inner cladding of the first optical fiber 30 via the optical fiber 25, and is incident on the inner cladding 12 of the active element-added optical fiber 10 from the inner cladding of the first optical fiber 30.

The third optical fiber 60 is an optical fiber having a core and a cladding. The core of the third optical fiber 60 is connected to the core of the first optical fiber 30 in the optical combiner 50. Therefore, the light propagating through the core of the first optical fiber 30 toward the optical combiner 50 is incident on the core of the third optical fiber 60. Further, on the side of the third optical fiber 60 opposite to the side connected to the first optical fiber 30, a terminal portion 65 that converts light into heat is provided.

Next, the operation of the fiber laser device 1 will be described.

First, pumping light is emitted from each laser diode 21 of the pumping light source 20. This pumping light is incident on the inner cladding 12 of the active element-added optical fiber 10 from the optical fiber 25 via the inner cladding of the first optical fiber 30, and mainly propagates through the inner cladding 12. The pumping light propagating through the inner cladding 12 pumps the active element added to the core 11 when passing through the core 11. The active element in the pumped state emits spontaneous emission light in a wavelength band including a predetermined wavelength. With this spontaneous emission light as a starting point, light including the predetermined wavelength commonly reflected by the first FBG 35 and the second FBG 45 resonates between the first FBG 35 and the second FBG 45. When the resonating light propagates through the core 11 of the active element-added optical fiber 10, the active element in the pumped state causes stimulated emission, and the resonating light is amplified. A part of the resonating light is transmitted through the second FBG 45 and emitted from the second optical fiber 40. Then, when the gain and the loss in the resonator including the first FBG 35, the active element-added optical fiber 10, and the second FBG 45 become equal, a laser oscillation state is formed, and light having a constant power is emitted from the second optical fiber 40.

Note that a major part of the light propagating from the active element-added optical fiber 10 side to the first optical fiber 30 and transmitted through the first FBG 35 is converted into heat at the terminal portion 65 and disappears.

Incidentally, as described above, each of the active element-added optical fiber 10, the first optical fiber 30, and the second optical fiber 40 is a few mode fiber that enables propagation of the LP02 mode light. Therefore, at or in the vicinity of a connection point between the first optical fiber 30 and the active element-added optical fiber 10 and at or in the vicinity of a connection point between the second optical fiber 40 and the active element-added optical fiber 10, light in an axisymmetric mode, which is the LP02 mode or higher, can be excited in addition to the LP01 mode light. However, the light emitted from the second optical fiber 40 can be light in which amplification of light in a higher mode, which is the LP11 mode or higher, is suppressed. Therefore, with the fiber laser device 1 of the present embodiment, light in which deterioration of beam quality is suppressed can be emitted.

One reason for this is that, in the present embodiment, the shape index $\kappa$ of the active element-added optical fiber 10 represented by Formula (3) described above is 0.99 or more and less than 1, and the shape index $\kappa'$ of the first optical fiber 30 and the second optical fiber 40 represented by Formula (4) described above is 0.99 or more and less than 1. With this configuration, at or in the vicinity of a connection point between the first optical fiber 30 and the active element-added optical fiber 10 and at or in the vicinity of a connection point between the second optical fiber 40 and the active element-added optical fiber 10, it is considered that excitation of light in an axisymmetric mode, which is the LP02 mode or higher, is suppressed. Further, it is considered that also when light propagates through the active element-added optical fiber 10, excitation of light in an axisymmetric mode, which is the LP02 mode or higher, is suppressed, and the LP01 mode light is mainly excited. Further, another reason is that the active element is not added to the second region 11b. With this configuration, it is considered that amplification of light in a higher mode, which is the LP11 mode or higher, is suppressed as compared with amplification of the LP01 mode light in the active element-added optical fiber 10.

As described above, in the active element-added optical fiber 10 according to the present embodiment, the core 11 includes the first region 11a of $0 \leq r \leq 0.65d$ and the second region 11b that surrounds the first region 11a and is of $0.65d < r \leq d$. The active element pumped by the pumping light is added to the first region 11a at least in part, the active element is not added to the second region 11b, and the shape index $\kappa$ represented by Formula (3) described above is 0.99 or more and less than 1.

Since the shape index $\kappa$ is 0.99 or more and less than 1 as described above, it is considered that when light is incident on the core 11 of the active element-added optical fiber 10 and when light propagates through the core, light in an axisymmetric mode, which is the LP02 mode or higher, is less likely to be excited. Further, it is considered that the active element is added to the first region 11a at least in part to amplify the LP01 mode light, and the active element is not added to the second region 11b to suppress the amplification of the light in a higher mode, which is the LP11 mode or higher, even when the light in a higher mode, which is the LP11 mode or higher, is excited. Therefore, with the active element-added optical fiber 10 of the present invention, deterioration of beam quality can be suppressed and light can be amplified.

Further, in the present embodiment, as described above, the average value of the concentration of the active element in the region of $0 \leq r \leq 0.1ra$ is higher than the average value of the concentration of the active element in the region of $0.1ra < r < 0.9ra$. Therefore, it is possible to preferentially amplify the basic mode having high intensity at the center of the core 11. Furthermore, a region having a refractive index higher than the average value of the refractive index in the first region 11a, which is a predetermined region to which the active element is added, exists in the region of $0.5ra < r < ra$. Therefore, it is possible to suppress the effective cross-sectional area of light propagating through the core 11 from becoming too small and to suppress the occurrence of a nonlinear optical phenomenon.

Furthermore, in the present embodiment, the standard deviation of the refractive index profile in the region of $0.9ra + 0.1d < r \leq 0.9d$ is 0.01 or less. As described above, since the variation in the refractive index in the outer peripheral portion of the core is small, even when a region having a refractive index higher than the average value of the refractive index in the predetermined region exists in the region of $0.5ra < r < ra$ as described above, Formula (3) described above can be easily satisfied. Therefore, it is possible to easily realize the active element-added optical fiber 10 in which deterioration of beam quality is suppressed and light can be amplified.

Further, in the active element-added optical fiber 10 of the present embodiment, the active element is added throughout the first region 11a. Therefore, the LP01 mode light can be amplified at a higher amplification rate as compared with the case where the active element is added only to a part of the first region 11a.

Although the present invention has been described by taking the embodiment as an example, the present invention is not to be construed as being limited to the above embodiment, and the configuration can be appropriately changed within the scope of achieving the object of the present invention.

For example, the theoretical cutoff wavelength of the LP02 mode light of the active element-added optical fiber 10 of the embodiment described above is preferably shorter than 1760 nm. By setting the theoretical cutoff wavelength of the LP02 mode light in this manner, for example, in a case where the active element-added optical fiber 10 is bent at a diameter of 120 mm and light of 1070 nm is caused to propagate through the active element-added optical fiber 10, the cutoff wavelength in the LP02 mode can be shorter than 1070 nm at the site of the active element-added optical fiber 10 bent at a diameter of 120 mm, and the LP02 mode light can be leaked while the LP01 mode light is propagated. FIG. 6 is a diagram illustrating a variation of the fiber laser device 1. Specifically, it is a diagram illustrating a fiber laser device having a site of the active element-added optical fiber 10 bent at a diameter of 120 mm as described above. Note that, in the description of FIG. 6, the same configurations as those described in the above embodiment are denoted by the same reference numerals, and redundant description is omitted unless otherwise specified. The fiber laser device 1 of FIG. 6 is different from the fiber laser device of the above embodiment in that the theoretical cutoff wavelength of the LP02 mode light of the active element-added optical fiber 10 is shorter than 1760 nm, and the active element-added optical fiber 10 has a bent portion 15 bent at a diameter of 120 mm. Light having a wavelength of 1760 nm propagates through the bent portion 15, so that the LP02 mode light can be leaked. Therefore, when the active element-added optical fiber 10 has the bent portion 15, it is possible to suppress propagation of the light in a higher mode, which is the LP02 mode or higher, while propagating the LP01 mode light.

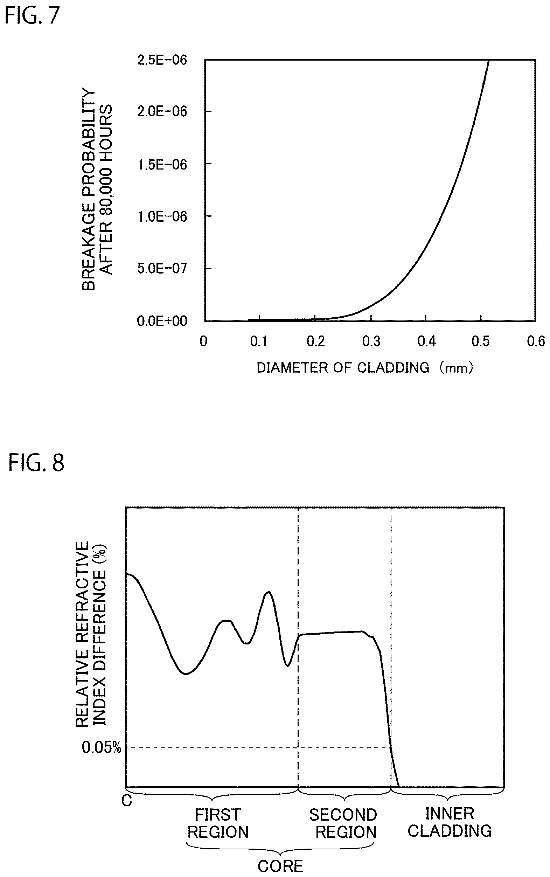

Incidentally, there is a concern that when the active element-added optical fiber 10 is bent at a diameter of 120 mm, the active element-added optical fiber 10 can be broken. Therefore, in this case, the diameter of the cladding made of quartz glass of the active element-added optical fiber 10 is preferably set to be within a predetermined size. The cladding made of quartz glass is the inner cladding 12 when the outer cladding 13 is made of resin, and is the inner cladding 12 and the outer cladding 13 when the outer cladding 13 is made of quartz glass. FIG. 7 is a diagram illustrating a relationship between a diameter of a cladding and a breakage probability. This breakage probability is the breakage probability of an optical fiber after 80,000 hours in a case where an optical fiber having a cladding made of quartz glass is wound one turn with a diameter of 120 mm and a load that increases the length of the optical fiber by 1% is applied. From FIG. 7, when the diameter of the cladding is 430 $\mu$m or less, the breakage probability of the optical fiber after 80,000 hours can be suppressed to $10^{-6}$ or less. Therefore, when the outer cladding 13 is made of resin, the diameter of the inner cladding 12 is preferably 430 $\mu$m or less, and when the outer cladding 13 is made of quartz glass, the diameter of the outer cladding 13 is preferably 430 $\mu$m or less.

Further, in the above embodiment, the active element is added throughout the first region 11a from the central axis to 65% of the radius. However, in the present invention, the active element may be added to a part of the first region 11a. For example, the active element may be added to a region of the first region 11a from the central axis to 55% of the radius. In this case, the radius ra of the predetermined region is 0.55d. Therefore, the predetermined region is a region of $0 \leq r \leq 0.55d$. Further, the radius ra of the predetermined region may be, for example, any of regions of 0.55d $\leq$ ra $\leq$ 0.65d.

Further, in the above embodiment, the resonator-type fiber laser device has been described as an example of the fiber laser device, but the fiber laser device using the active element-added optical fiber 10 of the present invention may be, for example, of a master oscillator-power amplifier (MO-PA) type in which pumping light and seed light are incident on the active element-added optical fiber 10. Note that, even in this case, it is preferable that the optical fiber to which the active element-added optical fiber 10 is connected has a shape index κ' represented by Formula (4) described above of 0.99 or more and less than 1. However, in Formula (4) in this case, r represents the distance in the radial direction in a case where the central axis C' of the optical fiber to which the active element-added optical fiber 10 is connected is 0, E'(r) is the electric field distribution of light propagating through the optical fiber to which the active element-added optical fiber 10 is connected, and E'$_i$(r) is the electric field distribution of light propagating through a step-index type optical fiber in which the refractive index profile of the core of the optical fiber to which the active element-added optical fiber 10 is connected is averaged.

Further, in the above embodiment, the region in which the relative refractive index difference is 0.05% from the central axis C to the inner cladding 12 is the core 11, but the region to be the core may not be the region in which the relative refractive index difference is 0.05% as long as it is the region in which the relative refractive index difference from the central axis to the inner cladding of the optical fiber is larger than 0%.

The present invention will be described below more specifically with reference to examples and comparative examples, but the present invention is not limited to the examples described below.

(Example 1)

The active element-added optical fiber illustrated in FIG. 2 was prepared. The relative refractive index profile of the active element-added optical fiber is as illustrated in FIG. 4, and the shape index κ of the active element-added optical fiber was 0.990. Further, the concentration distribution of ytterbium added to the core of the active element-added optical fiber is as illustrated in FIG. 3, and the addition diameter ratio of the region to which ytterbium is added was 0.65. The addition diameter ratio is a ratio of the diameter of the region to which ytterbium is added to the diameter of the core. As described in the above embodiment, since the first region is a region from the central axis to 65% of the radius of the core, in the active element-added optical fiber, ytterbium is added throughout the first region, and ytterbium is not added to the second region. Note that the active element-added optical fiber was an optical fiber in which the theoretical cutoff wavelength in the LP02 mode was shorter than 1760 nm.

Next, the fiber laser device illustrated in FIG. 1 was manufactured using the active element-added optical fiber. The shape index κ' of each of the first optical fiber and the second optical fiber used in each fiber laser device was 0.998. Further, an oscillation wavelength of light of each fiber laser device, i.e., a predetermined wavelength reflected by the first FBG and the second FBG was set to 1070 nm.

(Examples 2 to 10)

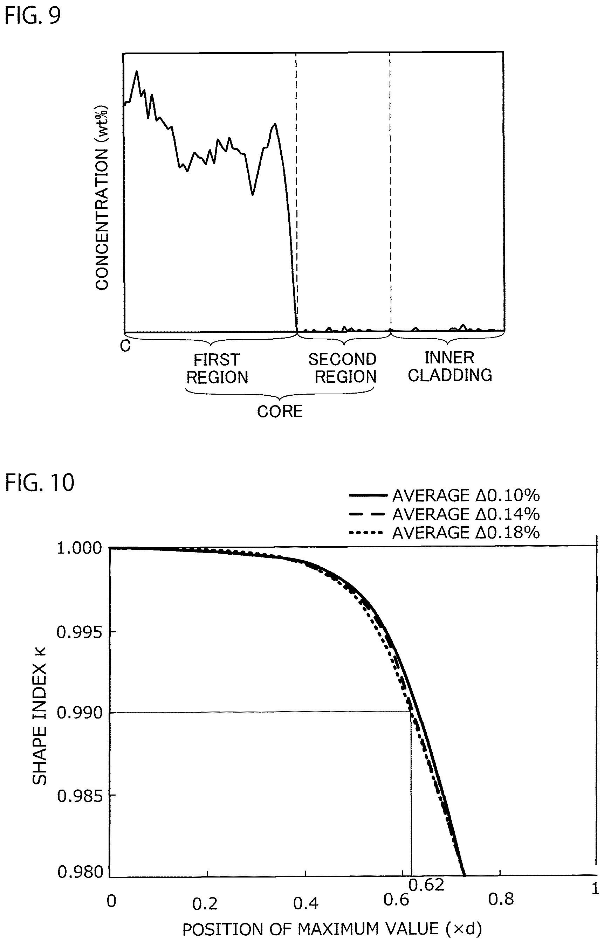

An active element-added optical fiber similar to that of Example 1 was prepared except that the shape index κ and the addition diameter ratio of the region to which ytterbium is added were the values shown in Table 1. Note that the relative refractive index profile of the active element-added optical fiber of Example 7 was as illustrated in FIG. 8, and the concentration distribution of ytterbium added to the core of the active element-added optical fiber was as illustrated in FIG. 9. Note that, in FIG. 9, it seems that ytterbium is slightly added to the second region and the inner cladding, but this is noise of a measurement device, and ytterbium is not actually added to the second region. That is, in the present specification, detection of an active element at a noise level is negligible. Such a noise level is, for example, about 1% of the average concentration of the active element. Note that these active element-added optical fibers were an optical fiber in which the theoretical cutoff wavelength in the LP02 mode was shorter than 1760 nm.

Next, the fiber laser device illustrated in FIG. 1 was manufactured using the active element-added optical fibers of Examples 2 to 7. The shape index κ' of each of the first optical fiber and the second optical fiber used in each fiber laser device was as shown in Table 1 described below. Further, the fiber laser device illustrated in FIG. 6 was manufactured using the active element-added optical fibers of Examples 8 to 10. The shape index κ' of each of the first optical fiber and the second optical fiber used in each fiber laser device was as shown in Table 1 described below. Further, an oscillation wavelength of light of each fiber laser device, i.e., a predetermined wavelength reflected by the first FBG and the second FBG was set to 1070 nm.

As shown in Table 1, the addition diameter ratio of the active element-added optical fiber in Examples 1 to 7 was 0.55 or more and 0.65 or less, and the shape index κ of the active element-added optical fiber in Examples 1 to 7 was 0.990 or more and 0.998 or less. Further, the shape index κ' of each of the first optical fiber and the second optical fiber in Examples 1 to 7 was 0.998 or more and 0.999 or less.

(Comparative Examples 1 to 8)

An active element-added optical fiber similar to that of Example 1 was prepared except that the shape index κ and the addition diameter ratio of the region to which ytterbium is added were the values shown in Table 1. Note that the active element-added optical fiber of Comparative Example 7 is the same as the active element-added optical fiber of Comparative Example 1, and the active element-added optical fiber of Comparative Example 8 is the same as the active element-added optical fiber of Comparative Example 5. Further, these active element-added optical fibers were an optical fiber in which the theoretical cutoff wavelength in the LP02 mode was shorter than 1760 nm.

Next, the fiber laser device illustrated in FIG. 1 was manufactured using the active element-added optical fibers of Comparative Examples 1 to 6. The shape index κ' of each of the first optical fiber and the second optical fiber used in each fiber laser device was as shown in Table 1 described below. Further, the fiber laser device illustrated in FIG. 6 was manufactured using the active element-added optical fibers of Comparative Examples 7 and 8. The shape index κ' of each of the first optical fiber and the second optical fiber used in each fiber laser device was as shown in Table 1 described below.

(Measurement of beam quality)

Next, light was emitted from each of the fiber laser devices using Examples 1 to 10 and Comparative Examples 1 to 8, and the beam quality indicated by $M^2$ was measured. The results are shown in Table 1.

Table 1

|  | K | Addition diameter ratio | K' | $M^2$ |
|---|---|---|---|---|
| Example 1 | 0.990 | 0.65 | 0.998 | 1.25 |
| Example 2 | 0.992 | 0.55 | 0.998 | 1.22 |
| Example 3 | 0.994 | 0.65 | 0.999 | 1.28 |
| Example 4 | 0.995 | 0.59 | 0.999 | 1.23 |
| Example 5 | 0.995 | 0.58 | 0.999 | 1.22 |
| Example 6 | 0.996 | 0.64 | 0.999 | 1.26 |
| Example 7 | 0.998 | 0.65 | 0.999 | 1.25 |
| Example 8 | 0.990 | 0.58 | 0.998 | 1.16 |
| Example 9 | 0.994 | 0.65 | 0.999 | 1.18 |
| Example 10 | 0.998 | 0.59 | 0.999 | 1.15 |
| Comparative Example 1 | 0.994 | 0.68 | 0.999 | 1.56 |
| Comparative Example 2 | 0.996 | 0.72 | 0.999 | 1.58 |
| Comparative Example 3 | 0.997 | 0.68 | 0.999 | 1.51 |
| Comparative Example 4 | 0.986 | 0.58 | 0.996 | 1.52 |
| Comparative Example 5 | 0.988 | 0.62 | 0.996 | 1.55 |
| Comparative Example 6 | 0.987 | 0.68 | 0.996 | 1.59 |
| Comparative Example 7 | 0.994 | 0.68 | 0.999 | 1.55 |
| Comparative Example 8 | 0.988 | 0.62 | 0.996 | 1.56 |

As is apparent from Table 1, the beam quality of the fiber laser device using the active element-added optical fiber of Examples 1 to 7 was superior to the beam quality of the fiber laser device using the active element-added optical fiber of Comparative Examples 1 to 6. That is, when at least the addition diameter ratio was 0.55 or more and 0.65 or less, the beam quality of the fiber laser device using the active element-added optical fiber was superior. This is considered to be because in Comparative Examples 1 to 3, since the addition diameter ratio of the region to which ytterbium is added in the active element-added optical fiber exceeds 0.65, the excited light in a higher mode, which is the LP11 mode or higher, is amplified by the active element-added optical fiber, and the light in a higher mode, which is the LP11 mode or higher, having high intensity is emitted. Further, in Comparative Examples 4 to 6, since the shape index $\kappa$ of the active element-added optical fiber is smaller than 0.99, it is considered that, in addition to the LP01 mode light, the light in an axisymmetric mode, which is the LP02 mode or higher, is excited with high intensity at or in the vicinity of a connection point between the first optical fiber and the active element-added optical fiber and at or in the vicinity of a connection point between the second optical fiber and the active element-added optical fiber, and the light was emitted.

Further, the beam quality of the fiber laser device using the active element-added optical fiber of Examples 8 to 10 was superior to the beam quality of the fiber laser device using the active element-added optical fiber of Comparative Examples 7 and 8. This is considered to be because in Comparative Example 7, since the addition diameter ratio of the region to which ytterbium is added in the active element-added optical fiber exceeds 0.65, the excited light in a higher mode, which is the LP11 mode or higher, is amplified by the active element-added optical fiber, and the light in a higher mode, which is the LP11 mode or higher, having high intensity is emitted. Further, in Comparative Example 8, since the shape index $\kappa$ of the active element-added optical fiber is smaller than 0.99, it is considered that, in addition to the LP01 mode light, the light in an axisymmetric mode, which is the LP02 mode or higher, is excited with high intensity at or in the vicinity of a connection point between the first optical fiber and the active element-added optical fiber and at or in the vicinity of a connection point between the second optical fiber and the active element-added optical fiber, and the light was emitted.

The beam quality of the fiber laser device using the active element-added optical fiber of Examples 8 to 10 was superior to the beam quality of the fiber laser device using the active element-added optical fiber of Examples 1 to 7. This is considered to be because light in the LP02 mode or higher is removed at the bent portion 15 in the fiber laser device illustrated in FIG. 6.

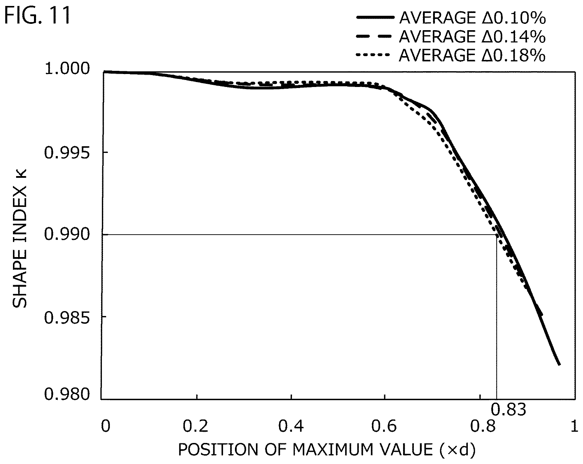

Next, the relationship between the position of the maximum value $N_{max}$ and the shape index $\kappa$ of the active element-added optical fiber was examined. Specifically, an active element-added optical fiber having a refractive index profile in which an average relative refractive index difference of the core is 0.10% or more and 0.18% or less and the average value of the relative refractive index difference in a region where the distance r from the central axis of the core is 0.1d or less is the maximum value $N_{max}$ or less was prepared, and the relationship between the position of the maximum value $N_{max}$ and the shape index $\kappa$ was examined. The results are illustrated in FIG. 10. Further, an active element-added optical fiber having a refractive index profile in which an average relative refractive index difference of the core is 0.10% or more and 0.18% or less and the average value of the relative refractive index difference in a region where the distance r from the central axis of the core is 0.055d or more and 0.1d or less is the maximum value $N_{max}$ or more was prepared, and the relationship between the position of the maximum value $N_{max}$ and the shape index $\kappa$ was examined. The results are illustrated in FIG. 11.

As illustrated in FIG. 10, it has been found that the shape index $\kappa$ of the active element-added optical fiber having a refractive index profile in which the average value of the relative refractive index difference in the region where the distance r is 0.1d or less is the maximum value $N_{max}$ or less decreases based on the function "$0.7819r^6-1.1832r^5+0.2533r^4+0.1919r^3-0.0840r^2+0.0072r+1.000$" when the average value of the relative refractive index difference is 0.10% and when the position of the maximum value $N_{max}$ is 0 or more and d or less. Further, it has been found that it decreases based on the function "$0.3812r^6-0.0426r^5-0.8848r^4+0.6834r^3-0.1751r^2+0.0129r+1.0000$" when the average value of the relative refractive index difference is 0.14% and when the position of the maximum value $N_{max}$ is 0 or more and d or less. Further, it has been found that it decreases based on the function "$-10.021r^6+14.282r^5-10.655r^3+7.369r^2-1.998r+1.196$" when the average value of the relative refractive index difference is 0.18% and when the position of the maximum value $N_{max}$ is 0 or more and 0.6d or less. Further, it has been found that it decreases based on the function "$0.2613r^6-0.3267r^4+0.0816r+0.9729$" when the average value of the relative refractive index difference is 0.18% and when the position of the maximum value $N_{max}$ is larger than 0.6 and d or less. Further, in the active element-added optical fiber having a refractive index profile in which the average value of the relative refractive index difference in the region where the distance r is 0.1d or less is the maximum value $N_{max}$ or less, it has been found that the value of the shape index $\kappa$ is 0.990 or more when at least one maximum value $N_{max}$ exists in the region of 0.62d or less.

Note that, in the active element-added optical fiber having a refractive index profile in which the average value of the relative refractive index difference in the region where the distance r is 0.1d or less is the maximum value $N_{max}$ or less, when the maximum value $N_{max}$ exists in the region of 0.45d or more and 0.62d or less, the effective refractive index can be made larger than that of the step-index type optical fiber.

Further, as illustrated in FIG. 11, it has been found that the shape index $\kappa$ of the active element-added optical fiber having a refractive index profile in which the average value of the relative refractive index difference in the region where the distance r is 0.055d or more and 0.1d or less is the maximum value $N_{max}$ or more decreases based on the function "$0.670r^6-1.651r^5+1.366r^4-0.454r^3+0.054r^2-0.004r+1.000$" when the average value of the relative refractive index difference is 0.10% and when the position of the maximum value $N_{max}$ is 0 or more and d or less. Further, it has been found that it decreases based on the function "$0.6274r^6-1.4742r^5+1.146r^4-0.3507r^3+0.0374r^2-0.0033r+1.000$" when the average value of the relative refractive index difference is 0.14% and when the position of the maximum value $N_{max}$ is 0 or more and d or less. Further, it has been found that it decreases based on the function "$0.017r^3-0.010r^2-0.001r+1.000$" when the average value of the relative refractive index difference is 0.18% and when the position of the maximum value $N_{max}$ is 0 or more and 0.3d or less. Further, it has been found that it decreases based on the function "$0.897r^6-1.919r^5+1.417r^4-0.434r^3+0.052r^2-0.004r+1.000$" when the average value of the relative refractive index difference is 0.18% and when the position of the maximum value $N_{max}$ is larger than 0.3d and 0.6d or less. Further, it has been found that it decreases based on the function "$0.0713r^6-0.1281r^4+0.0689r+0.9707$" when the average value of the relative refractive index difference is 0.18% and when the position of the maximum value $N_{max}$ is larger than 0.6 and d or less. Further, in the active element-added optical fiber having a refractive index profile in which the average value of the relative refractive index difference in the region where the distance r is 0.055d or more and 0.1d or less is the maximum value $N_{max}$ or more, it has been found that the value of the shape index $\kappa$ is 0.990 or more when at least one maximum value $N_{max}$ exists in the region of 0.1d or more and 0.83d or less.

Next, the relationship between the effective cross-sectional area of the light propagating through the core of the active element-added optical fiber having the refractive index profile in which the maximum value $N_{max}$ exists and the effective cross-sectional area of the light propagating through the core of the active element-added optical fiber having the step-type refractive index profile in which the relative refractive index difference of the core relative to the cladding is constant was examined.

First, a plurality of active element-added optical fibers having a maximum value was prepared. The active element-added optical fibers having the maximum value have one maximum value $N_{max}$ as in the above-described embodiment, and the value of the maximum value $N_{max}$ is different for each active element-added optical fiber having the maximum value. Further, the same number of step-type active element-added optical fibers as the active element-added optical fibers having the maximum value were prepared. Specifically, a plurality of sets of step-type active element-added optical fibers and active element-added optical fibers having a maximum value, in which the relative refractive index difference of one active element-added optical fiber of the step-type active element-added optical fibers is the same as the average value of the relative refractive index difference of one active element-added optical fiber of a plurality of active element-added optical fibers having a maximum value, was prepared. That is, a plurality of optical fiber sets having a common average value was prepared. Note that the common average value in each of the plurality of optical fiber sets is different for each optical fiber set.

Next, the effective cross-sectional area of each of the step-type active element-added optical fiber and the active element-added optical fiber having the maximum value, which constitute the pair described above, was calculated, and the verifications of obtaining the difference between these effective cross-sectional areas were performed. Specifically, Verification 1 of obtaining a difference in effective cross-sectional area using the active element-added optical fiber having a maximum value formed so that the average value in the region where the distance r from the central axis of the core is 0.055d or more and 0.1d or less is the maximum value $N_{max}$ or more, and Verification 2 of obtaining a difference in effective cross-sectional area using the active element-added optical fiber having a maximum value formed so that the average value in the region where the distance r is 0 or more and 0.1d or less is the maximum value $N_{max}$ or less were performed.

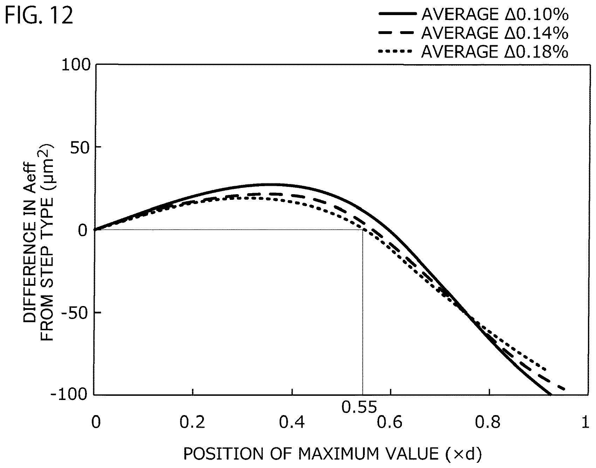

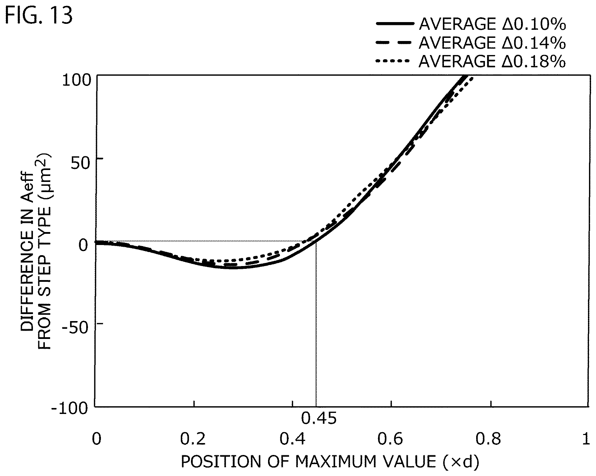

The results of Verification 1 and Verification 2 are illustrated in FIGS. 12 and 13, respectively. Note that FIGS. 12 and 13 illustrate the relationship between the position of the maximum value $N_{max}$ and the difference in effective cross-sectional area when an average value $\Delta$ of the relative refractive index difference of the core of the active element-added optical fiber having the maximum value is 0.10%, 0.14%, and 0.18%. Note that, as described above, the average value $\Delta$ of the relative refractive index difference of the core of the active element-added optical fiber having the maximum value is equal to the relative refractive index difference of the core of the step-type optical fiber constituting the optical fiber set together with the active element-added optical fiber having the maximum value.

As illustrated in FIG. 12, according to Verification 1 using the active element-added optical fiber having the maximum value in which the average value of the relative refractive index difference in the region of 0.055d or more and 0.1d or less is the maximum value $N_{max}$ or more, it has been found that when the average value of the relative refractive index difference of the core is larger than 0% and 0.18% or less, when the position of the maximum value $N_{max}$ is 0.55d or less, the effective cross-sectional area is larger than that in the case of the step-type active element-added optical fiber having the same relative refractive index difference, which constitutes the optical fiber set. That is, with such an active element-added optical fiber having a maximum value, the effective cross-sectional area is increased, and stimulated Raman scattering can be further suppressed.

Further, as illustrated in FIG. 13, according to Verification 2 using the active element-added optical fiber having the maximum value in which the average value of the relative refractive index difference in the region of 0 or more and 0.1d or less is the maximum value $N_{max}$ or less, it has been found that when the average value of the relative refractive index difference of the core is 0.10% or more, when the position of the maximum value $N_{max}$ is 0.45d or more, the effective cross-sectional area is larger than that in the case of the step-type optical fiber having the same relative refractive index difference, which constitutes the optical fiber set. That is, with such an active element-added optical fiber having a maximum value, the effective cross-sectional area is increased, and stimulated Raman scattering can be further suppressed. Note that, in Verification 2, the upper limit of the average value of the relative refractive index difference that provides the effect of increasing the effective cross-sectional area is not particularly limited as long as the position of the maximum value $N_{max}$ is 0.45d or more, but, for example, the upper limit of the average value of the relative refractive index difference may be set to 0.18%.

From the above results, with the active element-added optical fiber and the fiber laser device of the present invention, it has been confirmed that it is possible to suppress the deterioration of the beam quality and amplify the light by suppressing the intensity of the light in a higher mode, which is the LP11 mode or higher.

As described above, according to the present invention, an active element-added optical fiber, a resonator, and a fiber laser device capable of suppressing deterioration of beam quality and amplifying light are provided, and are expected to be used in a laser device for machining or the like.

**Claims**

1.  An active element-added optical fiber comprising a core, wherein

    when a radius of the core is d and a distance from a central axis in a radial direction of the core is r, the core includes a first region of $0 \leq r \leq 0.65d$ and a second region that surrounds the first region and is of $0.65d < r \leq d$, and an active element pumped by pumping light is added to the first region at least in part,
    the active element is not added to the second region, and
    a shape index $\kappa$ represented by Formula (1) described below is 0.99 or more and less than 1,

$$\kappa = \left( \int_0^\infty \frac{E(r)\,E_i(r)}{\sqrt{\int_0^\infty E(r)dr \int_0^\infty E_i(r)dr}}\, dr \right)^2 \qquad \cdots \ (1)$$

    where E(r) is an electric field distribution of light propagating through the active element-added optical fiber, and $E_i(r)$ is an electric field distribution of light propagating through a step-index type optical fiber in a case where a refractive index profile of the core is averaged.

2.  The active element-added optical fiber according to claim 1, wherein

    the active element is added from the central axis in the first region to a predetermined region in a radial direction, and
    when a radius of the predetermined region is ra, an average value of a concentration of the active element in a region of $0 \leq r \leq 0.1ra$ is higher than an average value of a concentration of the active element in a region of $0.1ra < r < 0.9ra$, and
    at least one region having a refractive index higher than an average value of a refractive index in the predetermined region exists in a region of $0.5ra < r < ra$.

3.  The active element-added optical fiber according to claim 2, wherein
    a standard deviation of a refractive index profile of a region of $0.9ra + 0.1d < r \leq 0.9d$ is 0.01 or less.

4.  The active element-added optical fiber according to claim 1, further comprising:

    a cladding that surrounds the core with no gap, wherein
    at least one maximum value of a relative refractive index difference with respect to the cladding exists in a region of 0.62d or less in the core, and
    an average value of the relative refractive index difference in a region of $0 \leq r \leq 0.1d$ in the core is the maximum value or less.

5.  The active element-added optical fiber according to claim 4, wherein
    the maximum value exists in a region of 0.45d or more and 0.62d or less.

**6.** The active element-added optical fiber according to claim 1, further comprising:

a cladding that surrounds the core with no gap, wherein
at least one maximum value of a relative refractive index difference with respect to the cladding exists in a region of 0.1d or more and 0.83d or less in the core, and
an average value of the relative refractive index difference in a region of 0.055d $\leq$ r $\leq$ 0.1d in the core is the maximum value or more.

**7.** The active element-added optical fiber according to claim 1, further comprising:

a cladding that surrounds an outer peripheral surface of the core with no gap, wherein
an average value of a relative refractive index difference of the core with respect to the cladding is 0.10% or more,
at least one maximum value of the relative refractive index difference exists in a region of 0.45d or more in the core, and
an average value of the relative refractive index difference in a region of 0 $\leq$ r $\leq$ 0.1d in the core is the maximum value or less.

**8.** The active element-added optical fiber according to claim 1, further comprising:

a cladding that surrounds an outer peripheral surface of the core with no gap, wherein
an average value of a relative refractive index difference of the core with respect to the cladding is larger than 0% and 0.18% or less,
at least one maximum value of the relative refractive index difference exists in a region of 0.55d or less in the core, and
an average value of the relative refractive index difference in a region of 0.055d $\leq$ r $\leq$ 0.1d in the core is the maximum value or more.

**9.** The active element-added optical fiber according to any one of claims 1 to 8, wherein
the active element is added throughout the first region.

**10.** The active element-added optical fiber according to any one of claims 1 to 9, wherein
a theoretical cutoff wavelength of LP02 mode light is shorter than 1760 nm.

**11.** The active element-added optical fiber according to claim 10, wherein
a diameter of a cladding surrounding the core is 430 $\mu$m or less.

**12.** The active element-added optical fiber according to any one of claims 1 to 11, wherein
the active element includes ytterbium.

**13.** The active element-added optical fiber according to claim 12, wherein
a ratio of a diameter of a region to which the ytterbium is added to a diameter of the core is 0.55 or more and 0.65 or less.

**14.** A fiber laser device comprising:

the active element-added optical fiber according to any one of claims 1 to 13; and
a light source configured to emit light that pumps the active element.

**15.** A resonator comprising:

the active element-added optical fiber according to any one of claims 1 to 13;
a first optical fiber configured to include a core optically coupled to the core of the active element-added optical fiber on one side of the active element-added optical fiber; and
a second optical fiber configured to include a core optically coupled to the core of the active element-added optical fiber on an other side of the active element-added optical fiber, wherein
the core of the first optical fiber includes a first mirror that reflects light having at least a part of wavelength of light emitted by the pumped active element,
the core of the second optical fiber includes a second mirror that reflects light having at least a part of wavelength of the light reflected by the first mirror at a reflectance lower than a reflectance of the first mirror, and

a shape index κ' of each of the first optical fiber and the second optical fiber represented by Formula (2) described below is 0.99 or more and less than 1,

$$\kappa' = \left( \int_0^\infty \frac{E'(r')\,E'_i(r')}{\sqrt{\int_0^\infty E'(r')dr'\int_0^\infty E'_i(r')dr'}}\,dr' \right)^2 \qquad \cdots (2)$$

where r' indicates a distance in a radial direction in a case where a central axis of the first optical fiber and the second optical fiber is 0, E'(r') is an electric field distribution of each light propagating through the first optical fiber and the second optical fiber, and E'$_i$(r') is an electric field distribution of each light propagating through a step-index type optical fiber in a case where each of a refractive index profile of the core of the first optical fiber and a refractive index profile of the core of the second optical fiber are averaged.

16. A fiber laser device comprising:

the resonator according to claim 15; and
a light source configured to emit light that pumps the active element.

FIG. 1

FIG. 2

FIG. 3

FIG. 4

FIG. 5

FIG. 6

FIG. 7

FIG. 8

FIG. 9

FIG. 10

FIG. 11

FIG. 12

FIG. 13

## INTERNATIONAL SEARCH REPORT

| International application No. |
| --- |
| PCT/JP2020/014337 |

**A. CLASSIFICATION OF SUBJECT MATTER**
Int.Cl. H01S3/067(2006.01)i, G02B6/02(2006.01)i, G02B6/036(2006.01)i
FI: H01S3/067, G02B6/02376B, G02B6/036
According to International Patent Classification (IPC) or to both national classification and IPC

**B. FIELDS SEARCHED**

Minimum documentation searched (classification system followed by classification symbols)
Int.Cl. H01S3/067, G02B6/02, G02B6/036

Documentation searched other than minimum documentation to the extent that such documents are included in the fields searched
Published examined utility model applications of Japan 1922-1996
Published unexamined utility model applications of Japan 1971-2020
Registered utility model specifications of Japan 1996-2020
Published registered utility model applications of Japan 1994-2020

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2003-8114 A (MITSUBISHI CABLE IND LTD.) 10.01.2003 (2003-01-10), paragraphs [0009]-[0017], fig. 1-3 | 1, 12-14 |
| X | JP 2003-69116 A (FUJITSU LIMITED) 07.03.2003 (2003-03-07), paragraph [0062], fig. 15 | 1, 9, 14 |
| A | JP 2000-252558 A (SUMITOMO ELECTRIC INDUSTRIES, LTD.) 14.09.2000 (2000-09-14), entire text, all drawings | 1-16 |
| A | JP 3-48225 A (FURUKAWA ELECTRIC CO., LTD.) 01.03.1991 (1991-03-01), entire text, all drawings | 1-16 |
| A | WO 2014/142010 A1 (FUJIKURA LTD.) 18.09.2014 (2014-09-18), entire text, all drawings | 1-16 |
| A | WO 2004/075364 A1 (FUJITSU LIMITED) 02.09.2004 (2004-09-02), entire text, all drawings | 1-16 |

☐ Further documents are listed in the continuation of Box C.    ☒ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| 08.06.2020 | 16.06.2020 |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

**INTERNATIONAL SEARCH REPORT**
Information on patent family members

International application No.

PCT/JP2020/014337

```
JP 2003-8114 A      10.01.2003    (Family: none)

JP 2003-69116 A     07.03.2003    US 2003/0039026 A1
                                  fig. 15
                                  EP 1286432 A2

JP 2000-252558 A    14.09.2000    US 6687439 B1
                                  entire text, all drawings
                                  EP 1091461 A1

JP 3-48225 A        01.03.1991    (Family: none)

WO 2014/142010 A1   18.09.2014    US 2016/0043525 A1
                                  entire text, all drawings

WO 2004/075364 A1   02.09.2004    US 2005/0179992 A1
                                  entire text, all drawings
```

**EP 3 952 037 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5124701 B